(19) 

Europäisches
Patentamt
European
Patent Office
Office européen
des brevets

(11) **EP 2 523 464 A2**

(12) **EUROPEAN PATENT APPLICATION**

(43) Date of publication:
**14.11.2012 Bulletin 2012/46**

(51) Int Cl.:
*H04N 13/04* (2006.01)     *H04N 13/00* (2006.01)

(21) Application number: **12166628.3**

(22) Date of filing: **03.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.05.2011 KR 20110045021
19.08.2011 KR 20110082688**

(71) Applicant: **LG Electronics Inc.
Yeongdeungpo-gu
Seoul 150-721 (KR)**

(72) Inventors:
• **Ahn, Mooki**
  **Gyeonggi-do 451-862 (KR)**
• **Kim, Hyunseok**
  **Gyeonggi-do 451-862 (KR)**

(74) Representative: **Cabinet Plasseraud
52, rue de la Victoire
75440 Paris Cedex 09 (FR)**

(54) **Apparatus and method for processing 3-dimensional image**

(57)    An apparatus and method for processing a 3-Dimensional (3D) image are disclosed. A display is configured to display an image. An image capture device captures an image of the surrounding environment of the 3D image processing apparatus. A controller detects glasses in a video frame captured by the image capture device, and controls switching to a 3D video mode in which the display displays a 3D image according to the detected results.

EP 2 523 464 A2

## Description

This application claims the benefit of Korean Application No. 10-2011-0045021, filed on May 13, 2011 and Korean Application No. 10-2011-0082688, filed on August 19, 2011 which are hereby incorporated by reference as if fully set forth herein.

## BACKGROUND OF THE INVENTION

### Field of the Invention

The present invention relates to an apparatus and method for processing a 3-Dimensional (3D) image, and more particularly, to a 3D image processing apparatus and method for displaying a 3D image.

### Discussion of the Related Art

Recently, display technologies for representing 3-Dimensional (3D) images have been studied and utilized in a variety of fields. In particular, as a utilization example of the 3D image display technologies, electronic apparatuses for displaying 3D images are being watched with keen interest.

The 3D image display technologies are based on the principle of binocular disparity in which a viewer can perceive 3D imagery due to a difference between viewpoints of both eyes. The 3D image display technologies are classified into a shutter glass method, an autostereoscopic method, a holography method, and the like. A user may need to wear a separate device such as polarized glasses and the like in the shutter glass method, and the user may view 3D images only in a predetermined location through the autostereoscopic method. Accordingly, to overcome the above-mentioned problems in the shutter glass method and the autostereoscopic method, the holography method has recently been a topic of increased study.

## SUMMARY OF THE INVENTION

Accordingly, the present invention is directed to an apparatus and method for processing a 3-dimensional image that substantially obviate one or more problems due to limitations and disadvantages of the related art.

One object of the present invention is to provide an apparatus for processing a 3-Dimensional (3D) image which can switch a video mode in conformity with a viewing intention of a viewer, and a method for switching the video mode of the 3D image processing apparatus.

Another object of the present invention is to provide an apparatus and method for processing a 3D image, which can display an appropriate 3D image in conformity with a viewing distance.

To achieve these objects and other advantages and in accordance with the purpose of the invention, as embodied and broadly described herein, a method for switching a video mode of a 3-Dimensional (3D) image processing apparatus includes detecting glasses in a captured video frame, and switching the video mode to a 3D video mode that displays a 3D image according to the detected results.

The detecting may include checking whether or not the detected glasses have a predefined shape, and the detected results may include the checked results.

The detecting may include checking whether or not the detected glasses include a predefined mark, and the detected results may include the checked results.

The mark may be formed of at least one of Light Emitting Diode (LED) light, a luminous material and a fluorescent material.

The checking may include checking a first mark and a second mark in the detected glasses, calculating a distance value between the checked first mark and the checked second mark, calculating a depth setting value based on the calculated distance value, and adjusting a depth value of a 3D image based on the calculated depth setting value.

The detecting may include checking whether or not a user is wearing the detected glasses, and the detected results may include the checked results.

The 3D video mode may include a first 3D video mode that displays a received 2D image as a 3D image and a second 3D video mode that displays a received 3D image as a 3D image.

The switching to the 3D video mode may include checking whether or not a 3D image corresponding to a displayed image is present, and selecting one of the first 3D video mode and the second 3D video mode based on the checked results.

The 3D image processing method may further include switching the video mode to a 2D video mode that displays a 2D image based on the detected results.

In accordance with another aspect of the present invention, a 3-Dimensional (3D) image processing apparatus includes a display configured to display an image, and a controller configured to detect glasses in a captured video frame and to control switching to a 3D video mode in witch the display displays a 3D image according to the detected results.

In accordance with another aspect of the present invention, a method for switching a video mode of a 3-Dimensional (3D) image processing apparatus includes sensing the surrounding environment of the 3D image processing apparatus, producing viewing intention information with regard to viewing intention of a user using the sensed information, checking whether or not the produced viewing intention information indicates 3D video viewing, and switching the video mode to a 3D video mode that displays a 3D image according to the checked results. The sensed information may include at least one of a captured image, a signal transmitted from 3D glasses, and a beam emitted from the 3D glasses.

The producing the viewing intention information may include checking whether or not a mark of 3D glasses is detected in a captured image. The mark may be formed using at least one of Light Emitting Diode (LED) light, a luminous material and a fluorescent material.

The producing the viewing intention information may further include checking whether or not the user is wearing the 3D glasses. Whether or not the user is wearing the 3D glasses may be checked based on a distance between the 3D glasses and eyes of the user.

The 3D video mode may include a first 3D video mode that displays a received 2D image as a 3D image and a second 3D video mode that displays a received 3D image as a 3D image. The method may further include checking whether or not a 3D image corresponding to a displayed image is present, and selecting one of the first 3D video mode and the second 3D video mode based on the checked results.

The method may further include switching the video mode to a 2D video mode that displays a 2D image based on the checked results.

In accordance with another aspect of the present invention, a 3-Dimensional (3D) image processing apparatus includes a sensing unit configured to sense the surrounding environment of the 3D image processing apparatus, and a controller configured to produce viewing intention information with regard to viewing intention of a user using the sensed information, to check whether or not the produced viewing intention information indicates 3D video viewing, and to control switching to a 3D video mode that displays a 3D image according to the checked results. The sensed information may include at least one of a captured image, a signal transmitted from 3D glasses, and a beam emitted from the 3D glasses.

The controller may check whether or not a mark of 3D glasses is detected in a captured image. When the mark is detected, the controller may produce viewing intention information that indicates 3D vide viewing. The mark may be formed using at least one of Light Emitting Diode (LED) light, a luminous material and a fluorescent material.

The controller may check whether or not the user is wearing the 3D glasses provided with the detected mark. When the user is wearing the 3D glasses, the controller may produce viewing intention information that indicates 3D video viewing.

The controller may check that the user is wearing the glasses based on a distance between the 3D glasses and eyes of the user.

The 3D video mode may include a first 3D video mode that displays a received 2D image as a 3D image and a second 3D video mode that displays a received 3D image as a 3D image. The controller may check whether or not a 3D image corresponding to a displayed image is present, and may select one of the first 3D video mode and the second 3D video mode based on the checked results.

The controller may control switching to a 2D video mode that displays a 2D image based on the checked results.

In accordance with another aspect of the present invention, a 3-Dimensional (3D) image processing method includes detecting a first mark and a second mark of glasses in a captured video frame, calculating a distance value between the detected first mark and the second first mark, calculating a depth setting value based on the distance value, and adjusting a depth value of a 3D image based on the calculated depth setting value. The first mark and the second mark may be located respectively on a rim of a left eye lens and a rim of a right eye lens of the glasses. The mark may be formed of at least one of Light Emitting Diode (LED) light, a luminous material and a fluorescent material. The distance value may be the number of pixels between the first mark and the second mark.

The 3D image processing method may further include calculating an angle value based on a shape of at least one of the first mark and the second mark, and the calculating the depth setting value may include calculating the depth setting value based on the distance value and the angle value. The angle value may be calculated based on at least one of a horizontal length of the mark and a ratio of the horizontal length to a vertical length of the mark.

The 3D image processing method may further include checking whether or not the direction of eyes of a user who is wearing the glasses faces a screen based on the angle value, and whether or not to implement the adjusting the depth value of the 3D image may be determined based on the checked results. The checking the direction of eyes faces the screen may further include checking whether or not the angle value is a preset angle or more.

The calculating the depth setting value may include calculating a viewing distance using the distance value and the angle value, and calculating the depth setting value based on the calculated viewing distance. The depth setting value may be calculated based on a ratio of a reference viewing distance to the calculated viewing distance.

In accordance with a further aspect of the present invention, a 3-Dimensional (3D) image processing apparatus includes a receiver configured to receive a 3-Dimensional (3D) image, and a controller configured to detect a first mark and a second mark of glasses in a captured video frame, to calculate a distance value between the detected first mark and the detected second mark, to calculate a depth setting value based on the calculated distance value, and to control adjustment of a depth value of the received 3D image based on the calculated depth setting value. The first mark and the second mark may be located respectively on a rim of a left eye lens and a rim of a right eye lens of the glasses. The mark may be formed of at least one of Light Emitting Diode (LED) light, a luminous material and a fluorescent material. The distance value may be the number of pixels between the first mark and the second mark.

The controller may calculate an angle value based on a shape of at least one of the first mark and the second mark, and may calculate the depth setting value based on the distance value and the angle value. The angle value may be calculated based on at least one of a horizontal length of the mark and a ratio of the horizontal length to a vertical length of the mark.

The controller may check whether or not the direction of eyes of a user who is wearing the glasses faces a screen based on the angle value, and may control the adjusting the depth value of the 3D image based on the checked results. The controller may check that the direction of eyes of the user faces the screen when the angle value is less than a preset angle.

The controller may calculate a viewing distance using the distance value and the angle value, and may calculate the depth setting value based on the calculated viewing distance. The depth setting value may be calculated based on a ratio of a reference viewing distance to the calculated viewing distance.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a configuration of an exemplary embodiment of an apparatus for processing a 3D image according to the present invention;
FIG. 2 is a block diagram illustrating a configuration of an exemplary embodiment of a signal processor;
FIG. 3 is a diagram illustrating examples of a mark for glasses;
FIG. 4 is a diagram illustrating an exemplary embodiment of glasses provided with marks;
FIG. 5 is a diagram schematically illustrating a distance between marks of glasses extracted from a captured video frame;
FIG. 6 is a table illustrating an exemplary embodiment of a distance reference table;
FIG. 7 is a diagram illustrating a shape of a mark of glasses extracted from a captured video frame;
FIG. 8 is a table illustrating an exemplary embodiment of an angle reference table;
FIG. 9 is a table illustrating another exemplary embodiment of an angle reference table;
FIG. 10 is a table illustrating an exemplary embodiment of a depth value setting reference table;
FIG. 11 is a diagram explaining binocular disparity;
FIG. 12 is a diagram illustrating depth perception depending on the magnitude of binocular disparity;
FIG. 13 is a diagram explaining an exemplary embodiment of a method for adjusting a depth value of a 3D image;
FIG. 14 is a diagram illustrating coordinates of an object included in an image;
FIG. 15 is a diagram illustrating coordinates of an object after displacement of the object illustrated in FIG. 14 is converted;
FIG. 16 is a flowchart illustrating an exemplary embodiment of a method for processing a 3D image according to the present invention;
FIG. 17 is a diagram illustrating an exemplary embodiment of a video frame capturing an image in which a user is wearing 3D glasses;
FIG. 18 is a diagram illustrating an exemplary embodiment of a message that informs of recognition of 3D glasses occurs;
FIG. 19 is a diagram illustrating an exemplary embodiment of a message that asks whether or not to perform switching to a 3D video mode;
FIG. 20 is a flowchart illustrating an implementation procedure of an exemplary embodiment of a method for switching a video mode of a 3D image processing apparatus according to the present invention;
FIG. 21 is a flowchart illustrating an implementation procedure of an exemplary embodiment of a method for producing viewing intention information;
FIG. 22 is a flowchart illustrating an implementation procedure of an exemplary embodiment of a method for switching to a 3D video mode;
FIG. 23 is a flowchart illustrating an implementation procedure of another exemplary embodiment of a method for switching a video mode of a 3D image processing apparatus according to the present invention; and
FIG. 24 is a flowchart illustrating an implementation procedure of a further exemplary embodiment of a method for switching a video mode of a 3D image processing apparatus according to the present invention.

## DETAILED DESCRIPTION OF THE INVENTION

Reference will now be made in detail to the exemplary embodiments of the present invention with reference to the accompanying drawings. The configuration and operation of the present invention, which are illustrated in and described by the accompanying drawings, are described as at least one embodiment. However, it will be apparent to those skilled in the art that the technical spirit and essential configuration and operation of the present invention are not limited to the specific embodiment as set forth herein.

Although the terms used in the present invention are selected from general ones widely used in the art while considering their functions in the present invention, they may vary according to intention of a person skilled in the art, usual practice, the advent of new technology, etc. Also, in a specific case, the terms used in the description of the present invention may be selected by the applicant at his or her discretion, the detailed meanings of which are described in relevant parts of the description herein. Accordingly, the terms used herein should not be understood simply by the actual terms used but by the meaning lying within and the description disclosed herein.

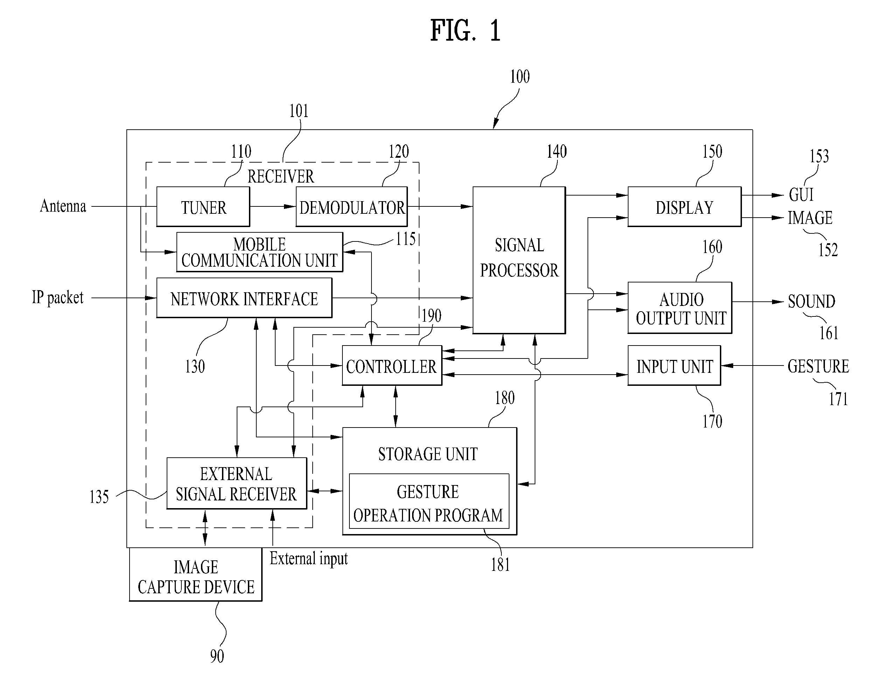

FIG. 1 is a block diagram illustrating a configuration of an exemplary embodiment of an apparatus for processing a 3D image according to the present invention.

Referring to FIG. 1, the 3D image processing apparatus 100 according to the present invention may include a receiver 101, a signal processor 140, a display 150, an audio output unit 160, an input unit 170, a storage unit 180, and a controller 190. In some embodiments, the 3D image processing apparatus 100 may further include an image capture device 90. The 3D image processing apparatus 100 may be a personal computer, such as a desktop computer, a laptop computer, a tablet, or a handheld computer, or may be a mobile terminal, such as a cellular phone, a smart phone, a Digital Multimedia Broadcasting (DMB) terminal, a Personal Digital Assistants (PDA), a Portable Multimedia Player (PMP), or a navigator, or may be a fixed electric appliance such as a digital TV.

The receiver 101 may receive video data including left view image data and right view image data. The receiver 101 may further receive broadcast information with regard to the video data. The video data may be a stereo-view or multi-view image. That is, the video data may include at least one left view image data and at least one right view image data.

The receiver 101 may include a tuner 110, a demodulator 120, a mobile communication unit 115, a network interface 130, and an external signal receiver 135.

The tuner 110 selects a Radio Frequency (RF) broadcast signal corresponding to a channel selected by a user from among RF broadcast signals received through an antenna and converts the selected RF broadcast signal into an Intermediate Frequency (IF) signal or a baseband video or audio signal.

The demodulator 120 receives a Digital IF (DIF) signal converted by the tuner 110 and demodulates the DIF signal. Additionally, the demodulator 120 may perform channel decoding.

After performing demodulation and channel decoding, the demodulator 120 may output a Transport Stream (TS) signal. A video signal, an audio signal, or a data signal may be multiplexed in the TS signal. For example, the TS signal may be a Moving Picture Experts Group-2 (MPEG-2) TS in which an MPEG-2 video signal and a Dolby AC-3 audio signal are multiplexed. More specifically, the MPEG-2 TS may include a 4-byte header and a 184-byte payload.

The TS signal generated by the demodulator 120 may be provided to the signal processor 140.

The mobile communication unit 115 transmits and receives a radio signal to and from at least one of a base station, an external terminal, and a server in a mobile communication network. The radio signal may include an audio call signal, a video call signal, or various types of data for transmission and reception of text or multimedia messages.

The external signal receiver 135 may provide an interface which can connect the 3D image processing apparatus 100 to an external device. The external device may be a variety of types of video or audio output devices, such as a Digital Versatile Disc (DVD) player, a Blu-ray player, a gaming device, a camcorder, and a computer (e.g., a notebook computer), and may be a storage device, such as a Universal Serial Bus (USB) memory or a USB hard disk. The 3D image processing apparatus 100 may display video and audio signals received from the external signal receiver 135 and may store or use data signals.

The external device may also be the image capture device 90. The image capture device 90 may include a plurality of cameras. The image capture device 90 may capture an image of a human, and may transmit a video frame containing the captured human image to the 3D image processing apparatus 100.

The signal processor 140 demultiplexes the TS signal generated from the demodulator 210, processes the demultiplexed signal, provides images to the display 150, and controls the audio output unit 160 to output sound 161. The signal processor 140 may receive image data, sound data, and broadcast data from the mobile communication unit 115, the network interface 130, and the external signal receiver 135.

The signal processor 140 may receive a signal indicating a depth setting value from the controller 190. The signal processor 140 may reconstruct left view image data and right view image data of video data according to the received depth setting value.

In some embodiments, the signal processor 140 may calculate a displacement value of an object included in the video data and may modify the calculated displacement value using the depth setting value. Additionally, the signal processor 140 may reconstruct left view image data and right view image data such that the displacement value of the object is modified according to the modified displacement value.

The display 150 displays an image 152. The image 152 may be a display image of the video data reconstructed by the signal processor 140. Specifically, the video data may be 3D video data having an adjusted depth value. The display 150 may operate in conjunction with the controller 190. The display 150 may display a Graphical User Interface (GUI) 153 for providing an interface, which is easy to use, between a user and an Operating System (OS) of the 3D image processing apparatus 100 or between applications which are being executed on the OS.

The audio output unit 160 may receive audio data from the signal processor 140 and the controller 190 and may output the sound 161 generated by reproduction of the received audio data.

The input unit 170 may be a touch screen which is arranged on the display 150 or at the front of the display 150. The touch screen may be integrated into the display 150 or may be a separate element. When the touch screen is arranged at the front of the display 150, a user may directly manipulate the GUI 153. For example, a user may place his or her finger on an object to be controlled.

The storage unit 180 generally provides a location where program code and data used by the 3D image processing apparatus 100 are stored. The storage unit 180 may be implemented as a Read-Only Memory (ROM), a Random Access Memory (RAM), a hard disk drive, and the like. The program code and data may be stored in a separable storage medium and, if necessary, may be loaded or installed onto the 3D image processing apparatus 100. The separable storage medium may include a CD-ROM, PC card, a memory card, a floppy disk, a magnetic tape, and a network component.

The storage unit 180 may store information with regard to marks of glasses, a distance reference table, an angle reference table, and a depth value setting information reference table. The information with regard to marks of glasses may include mark image data, mark color information and expository information with regard to marks.

The controller 190 executes an instruction and performs an operation related to the 3D image processing apparatus 100. For example, the controller 190 may control input and output between components of the 3D image processing apparatus 100 and data reception and processing, using an instruction detected in the storage unit 180. The controller 190 may be implemented as a single chip, a plurality of chips, or a plurality of electric components. For instance, various architectures including a dedicated or embedded processor, a single purpose processor, a controller, an Application-Specific Integrated Circuit (ASIC), etc. may be used as the controller 190.

The controller 190 executes computer code together with an OS and generates and uses data. The OS is generally known and therefore a detailed description thereof is omitted. An example of the OS may include Windows OS, Unix, Linux, Palm OS, DOS, Android, and Mac OS. The OS, other computer code, and data may be present within the storage unit 180 which operates under control of the controller 190.

The controller 190 may recognize a user action and may control the 3D image processing apparatus 100 based on the recognized user action. The user action may include selection of a physical button of the 3D image processing apparatus or a remote controller, execution of a prescribed gesture or selection of a soft button on a touch screen display, execution of a prescribed gesture recognized from an image captured through an image capture device, and production of prescribed sound recognized by voice recognition. The external signal receiver 135 may receive signals corresponding to a user action selected through a physical button of a remote controller. Gestures may include touch gestures and spatial gestures.

The input unit 170 receives a gesture 171, and the controller 190 executes instructions for performing operations associated with the gesture 171. The storage unit 180 may include a gesture operation program 181 which may be a part of an OS or an additional application. The gesture operation program 181 includes a series of instructions for recognizing the occurrence of the gesture 171 and informing one or more software agents of which actions should be taken in response to the gesture 171.

When a user performs one or more gestures, the input unit 170 transmits information with regard to the gestures to the controller 190. The controller 190 analyzes the gesture 171 using an instruction from the storage unit 180, more particularly, using the gesture operation program 181, and controls different components of the 3D image processing apparatus 100, such as the storage unit 180, the display 150, the audio output unit 160, the signal processor 140, the network interface 130, the input unit 170 and the like. The gesture 171 is distinguishable as a command for performing motion of an application stored in the storage unit 180, correcting a GUI object on the display 150, correcting data stored in the storage unit 180 and performing an operation in the network interface 130 and the signal processor 140.

The controller 190 may determine a depth setting value based on a viewing distance. The controller 190 may detect a first mark and a second mark of glasses from a video frame captured by the image capture device 90 and may calculate a viewing distance using a distance value between the detected first and second marks. Additionally, the controller 190 may calculate an angle value based on a shape of at least one of the detected first and second marks and may revise the viewing distance calculated based on the calculated angle value. The viewing distance before revision may be named a user distance value and the viewing distance after revision may be named a viewing distance.

In some embodiments, the controller 190 may reconstruct left view image data and right view image data of video data according to the determined depth setting value. In some embodiments, the controller 190 may control the signal processor 140 to reconstruct left view image data and right view image data of video data according to the determined depth setting value.

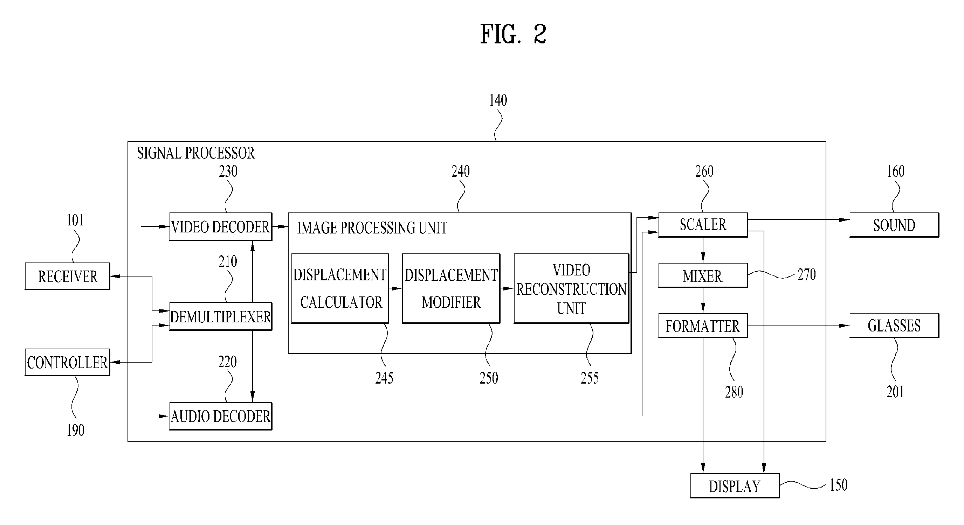

FIG. 2 is a block diagram illustrating a configuration of an exemplary embodiment of the signal processor.

Referring to FIG. 2, the signal processor 140 may include a demultiplexer 210, an audio decoder 220, a video decoder 230, a scaler 260, a mixer 270, and a formatter 280.

The demultiplexer 210 may receive a stream signal from the mobile communication unit 115, the network interface 130, and the external signal receiver 135 and may demultiplex the received stream signal into video data, audio data, and information data to provide the demultiplexed video data, audio data, and information data to the video decoder 230, the audio decoder 220, and the controller 190, respectively.

The audio decoder 220 may receive the audio data from the demultiplexer 210 and may restore the received audio data to provide the restored audio data to the scaler 260 or the audio output unit 160.

The video decoder 230 receives the video data from the demultiplexer 210 and restores the received video data to provide the restored video data to an image processing unit 240. The video data may include 3D video data. The video decoder 230 and the image processing unit 240 may constitute a single module. When the controller 190 acts as a substitute for the image processing unit 240, the video decoder 230 may provide the restored video data to the controller 190.

The image processing unit 240 may reconstruct left view image data and right view image data included in the restored video data according to the depth setting value. The image processing unit 240 may include a displacement calculator 245, a displacement modifier 250 and a video reconstruction unit 255.

The displacement calculator 245 calculates a displacement value of an object included in video data.

The displacement modifier 250 modifies the displacement value calculated by the displacement calculator 245 using the depth setting value. The displacement modifier may calculate the modified displacement value according to the depth setting value and the calculated displacement value.

The video reconstruction unit 255 may reconstruct left view image data and right view image data of video data such that the displacement value of the object is modified according to the displacement value modified by the displacement modifier 250.

The scaler 260 scales video data processed by the video decoder 230, the image processing unit 240 and the controller 190 and audio data processed by the audio decoder 220 into signals having a proper magnitude to output the video and audio data through the display 150 or a speaker (not shown). More specifically, the scaler 260 receives a 3D image and scales the 3D image so as to be suitable for a resolution of the display 150 or a prescribed aspect ratio. The display 150 may be adapted to output an image having a predetermined resolution, for example, a 720×480 format, a 1024x768 format, and the like according to product specifications. In this way, the scaler 260 may convert the resolution of a 3D image having various resolutions to a resolution of a corresponding display.

The mixer 270 mixes outputs of the scaler 260 and the controller 190.

The formatter 280 provides the video data, which is converted to obtain a 3D image, to the display 150. When a 3D video display method of a patterned retarder type is used, the formatter 280 may sample a received 3D video frame to provide a video frame in which left view image data and right view image data are horizontally or vertically alternated, and may output the sampled video frame.

When the 3D video display method is of a shutter glasses type, the formatter 280 may generate a sync signal to a 3D image signal to be output and may transmit the sync signal to glasses 201. The formatter 280 may include an infrared output unit (not shown) for transmission of the sync signal. The sync signal is a signal to synchronize a display time of a left view image or right view image in response to the 3D image signal with an opening/closing time of a left eye lens or right eye lens of the shutter glasses 201.

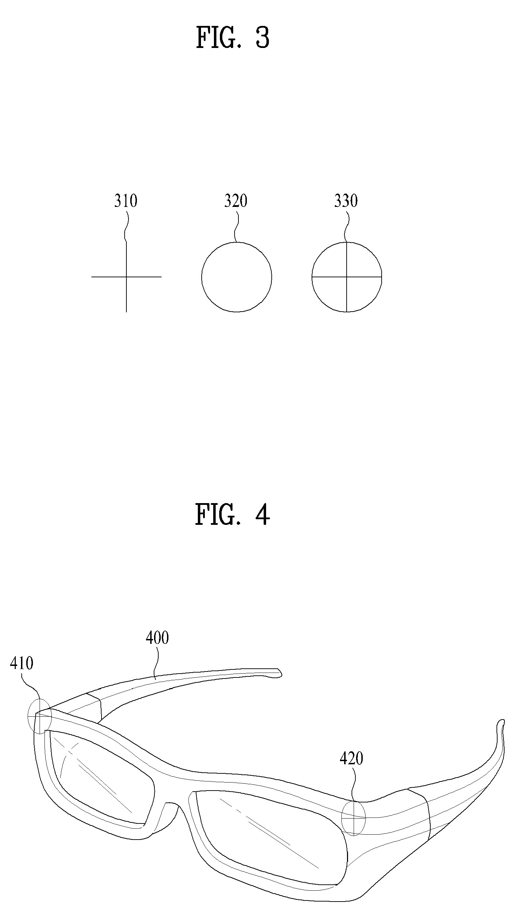

FIG. 3 is a diagram illustrating examples of a mark for glasses.

Referring to FIG. 3, the mark for glasses may be any one of a mark 310, a mark 320 and a mark 330. The mark for glasses is not limited to the examples illustrated in FIG. 3, and a visible mark on a subject of glasses included in a captured video frame is applicable as a mark of glasses of the present invention. The mark for glasses may be formed using at least one of Light Emitting Diode (LED) light, a luminous material and a fluorescent material. As such, the 3D image processing apparatus 100 according to the present invention may accurately trace a position of a user even under a dark environment and may display a 3D image having an optimal depth value in conformity with the traced position of the user.

FIG. 4 is a diagram illustrating an exemplary embodiment of glasses provided with marks.

Referring to FIG. 4, the marks for glasses may be displayed on glasses 400. Two marks having the same shape or two marks having different shapes may be displayed on the glasses 400.

In one example, as the marks for glasses, a mark 410 and a mark 420 may be displayed on the glasses 400. The mark 410 is located on the rim of a right eye lens of the glasses 400 and the mark 420 is located on the rim of a left eye lens of the glasses 400.

In some embodiments, the controller 190 may detect the glasses 400 from a video frame captured by the image capture device 90 and may detect the mark 410 and the mark 420 from the detected glasses 400.

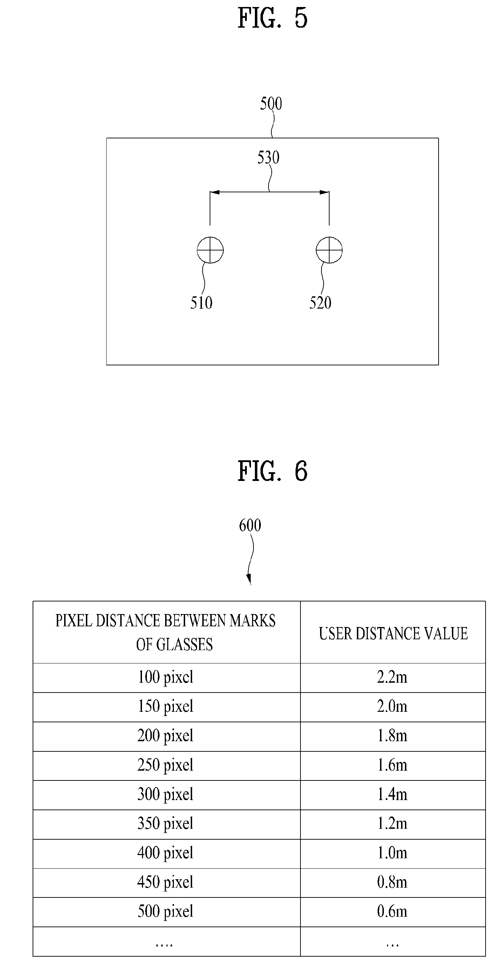

FIG. 5 is a diagram schematically illustrating a distance between marks of glasses extracted from a captured video frame.

Referring to FIG. 5, the controller 190 may detect a first mark 510 and a second mark 520 from a captured video frame 500. The controller 190 may recognize the first mark 510 and the second mark 520 based on mark color information included in the video frame 500.

The controller 190 may calculate a distance value 530 between the first mark 510 and the second mark 520. The distance value 530 may be represented by the number of pixels between the first mark 510 and the second mark 520, or may be represented by a metric length.

The controller 190 may also calculate a user distance value based on the distance value 530. In some embodiments, the controller 190 may calculate a user distance value y with respect to a distance value x between marks by the following Equation 1;

$$Equation\ 1$$

$$y = a + b(c - x)$$

where, "a" denotes a reference distance, "c" denotes a constant indicating a distance value based on the reference distance, and "b" denotes a constant indicating a ratio of variation of the user distance value to variation of the distance value 530. These constants "a", "b" and "c" may be determined by manufacturers.

FIG. 6 is a table illustrating an exemplary embodiment of a distance reference table.

Referring to FIG. 6, the controller 190 may calculate a user distance value with respect to the distance value 530 using a distance reference table. The controller 190 may detect a user distance value associated with the distance value 530 in the distance reference table 600. For example, when the distance value 530 is 100 pixels, the controller 190 may detect a user distance value of 2.2m mapped to 100 pixels in the distance reference table 600. Also, when the distance value 530 is 150 pixels, the controller 190 may detect a user distance value of 2.0m mapped to 150 pixels in the distance reference table 600.

When the same distance value as the distance value 530 is not present in the distance reference table 600, the controller 190 may detect a user distance value associated with a distance value close to the distance value 530 and then, may calculate a user distance value with respect to the distance value 530 using the detected distance value. When the distance value 530 is not present in the distance reference table 600, the controller 190 may calculate a user distance value y with respect to a distance value x by the following Equation 2;

$$Equation\ 2$$

$$y = y\_high + (y\_low - y\_high)*(x - x\_low)/(x\_high-x\_low)$$

where, "x_low" denotes a distance value that is present in the distance reference table 600 among values less than "x", "x_high" denotes a distance value that is present in the distance reference table 600 among values greater than "x", "y_high" denotes a user distance value with respect to "x_high" and "y_low" denotes a user distance value with respect to "x_low". In one example, when the distance value 530 is 125 pixels, the controller 190 may set "x_low" to 100 pixels and "x_high" to 150 pixels and may detect "y_high" of 2.0m and "y_low" of 2.2m. In conclusion, the controller 190 may calculate a user distance value of 2.1m.

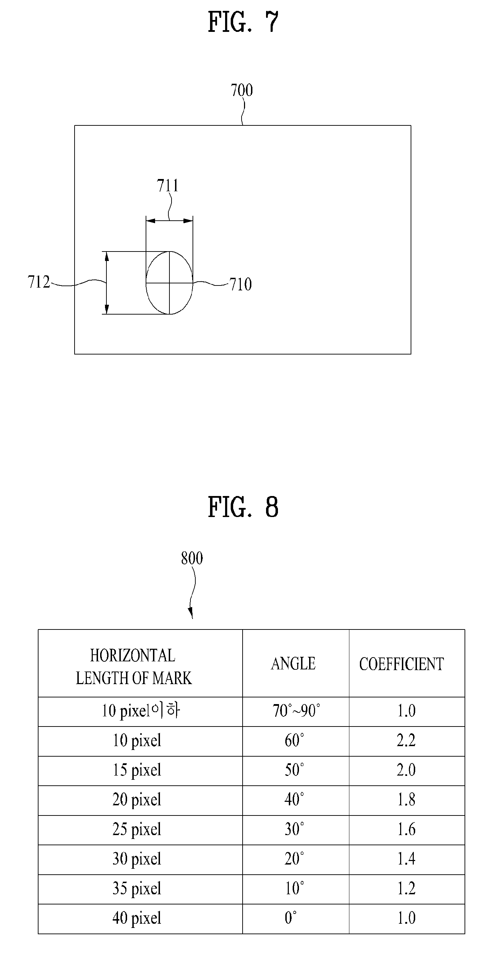

FIG. 7 is a diagram illustrating a shape of a mark of glasses extracted from a captured video frame.

Referring to FIG. 7, the controller 190 may detect a single mark 710 in a captured video frame 700. The controller 190 may recognize the mark 710 using information on the color of the mark 710. The information on the color of the mark 710 may be previously stored in the storage unit 180.

The controller 190 may calculate a horizontal length 711 of the mark 710. The horizontal length 711 may be represented by the number of pixels or may be represented by a metric length. The controller 190 may calculate an angle value based on the horizontal length 711.

The controller 190 may also calculate a vertical length 712 of the mark 710. The vertical length 712 may be represented by the number of pixels or may be represented by a metric length. The controller 190 may calculate an angle value based on both the horizontal length 711 and the vertical length 712.

FIG. 8 is a table illustrating an exemplary embodiment of an angle reference table.

Referring to FIG. 8, the controller 190 may calculate an angle value based on the horizontal length 711 using an angle reference table 800. The controller 190 may detect an angle value associated with the horizontal length 711 in the angle reference table 800. In one example, when the horizontal length 711 is 10 pixels, the controller 190 may detect an angle value of 60° mapped to 10 pixels in the angle reference table 800. Also, when the horizontal length 711 is 15 pixels, the controller 190 may detect an angle value of 50° mapped to 15 pixels in the angle reference table 800.

When the horizontal length 711 is not present in the angle reference table 800, the controller 190 may detect an angle value associated with a horizontal length close to the horizontal length 711 and may calculate an angle value with respect to the horizontal length 711 using the detected horizontal length. In an embodiment, when the horizontal length 711 is not present in the distance reference table 800, the controller 190 may calculate an angle value y with respect to a horizontal length x by the following Equation 3;

Equation 3

$$y = y\_high + (y\_low - y\_high)*(x - x\_low)/(x\_high-x\_low)$$

where, "x_low" denotes a horizontal length that is present in the angle reference table 800 among values less than "x", "x_high" denotes a horizontal length that is present in the angle reference table 800 among values greater than "x", "y_high" denotes an angle value with respect to "x_high", and "y_low" denotes an angle value with respect to "x_low". In one example, when the horizontal length 711 is 12.5 pixels, the controller 190 may set "x_low" to 10 pixels and "x_high" to 15 pixels and may detect "y_high" of 50° and "y_low" of 60°. In conclusion, the controller 190 may calculate an angle value of 55°.

The controller 190 may calculate a position angle coefficient associated with an angle value. In an exemplary calculation method, the controller 190 may calculate a position angle coefficient using the angle reference table 800. For example, when the calculated angle value is 50°, the controller 190 calculates a position angle coefficient of 2.0.

The controller 190 may calculate a position angle coefficient associated with the horizontal length 711 using the angle reference table 800. For example, when the horizontal length 711 is 10 pixels, the controller 190 may calculate a position angle coefficient of 2.2. when a position angle coefficient associated with the calculated horizontal length 711 is not present in the angle reference table 800, the controller 190 may calculate a position angle coefficient with respect to the horizontal length 711 by the following Equation 4;

Equation 4

$$y = y\_high + (y\_low - y\_high)*(x - x\_low)/(x\_high-x\_low)$$

where, "x_low" denotes a horizontal length that is present in the angle reference table 800 among values less than "x", "x_high" denotes a horizontal length that is present in the angle reference table 800 among values greater than "x", "y_high" denotes a position angle coefficient with respect to "x_high", and "y_low" denotes a position angle coefficient with respect to "x_low". In one example, when the ratio is 12.5 pixels, the controller 190 may set "x_low" to 10 pixels and "x_high" to 15 pixels and may detect "y_high" of 2.0 and "y_low" of 2.2. In conclusion, the controller 190 may calculate a position angle coefficient of 2.1.

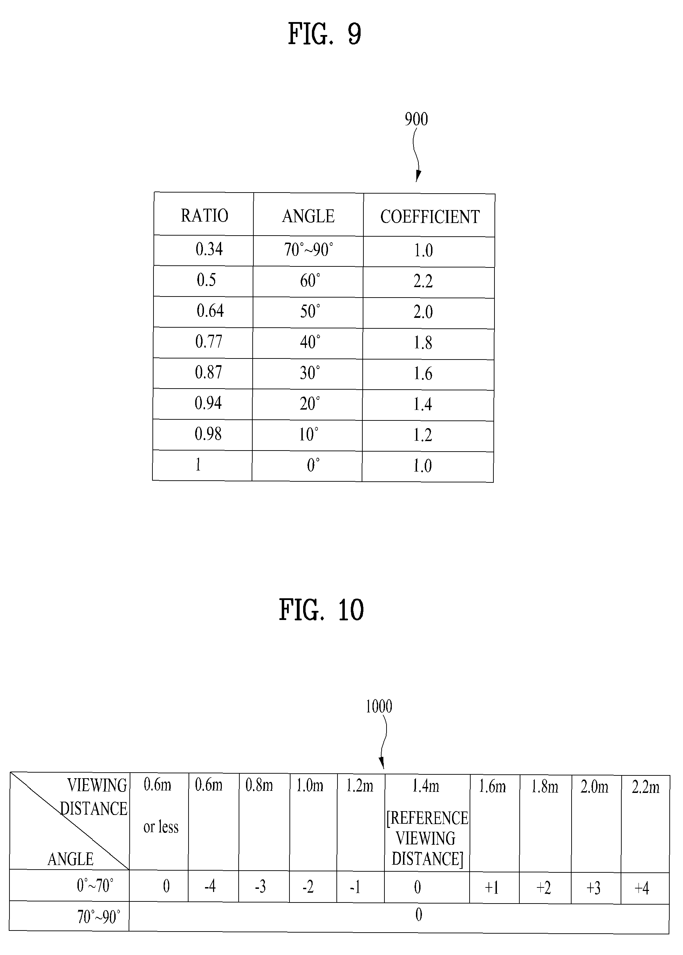

FIG. 9 is a table illustrating another exemplary embodiment of an angle reference table.

Referring to FIG. 9, the controller 190 may calculate an angle value with respect to a ratio using an angle reference table 900. The ratio may be a ratio of the horizontal length 711 to the vertical length 712. That is, the ratio may be calculated by the following Equation 5;

Equation 5

$$Y = H/V$$

where, "H" is the horizontal length 711, "V" is the vertical length 712, and "Y" is the ratio.

The controller 190 may detect an angle value associated with the calculated ratio in the angle reference table 900. In one example, when the ratio is 0.5, the controller 190 may detect an angle value of 60° mapped to 0.5 in the angle reference table 900. Also, when the ratio is 0.64, the controller 190 may detect an angle value of 50° mapped to 0.64 in the angle reference table 900.

Additionally, the controller 190 may calculate a position angle coefficient using the angle reference table 900. In one example, when the calculated angle value is 50°, the controller 190 may calculate a position angle coefficient of 2.0. The controller 190 may calculate the position angle coefficient associated with the ratio using the angle reference table 900. For example, when the calculated ratio is 0.98, the controller 190 may calculate a position angle coefficient of 1.2.

The controller 190 may calculate a viewing distance based on a user distance value and a position angle coefficient. In some embodiments, the controller 190 may calculate a viewing distance y by the following Equation 6;

Equation 6

$$y = a * b$$

where, "a" is a position angle coefficient and "b" is a user distance value.

The controller 190 may calculate a viewing distance based on a user distance value and an angle value. In some embodiments, the controller 190 may calculate a viewing distance y by the following Equation 7;

Equation 7

$$y = a * \cos\theta$$

where, "a" is a user distance value and "θ" is an angle value.

The controller 190 may calculate a depth setting value based on the calculated viewing distance.

FIG. 10 is a table illustrating an exemplary embodiment of a depth value setting reference table.

Referring to FIG. 10, the controller 190 may calculate a depth setting value suitable for the calculated viewing distance using a depth value setting reference table 1000. For example, when the calculated viewing distance is equal to a reference distance of 1.4m, the controller 190 may calculate a depth setting value of zero. When the calculated viewing distance is 1m, the controller 190 may calculate a depth setting value of -2m. When the calculated viewing distance is 2m, the controller 190 may calculate a depth setting value of 3m.

When the calculated viewing distance is a specific distance or less, the controller 190 may calculate a depth setting value of zero. That is to say, when the calculated viewing distance is a specific distance or less, the controller 190 may not adjust a depth value of a 3D image.

The controller 190 may check whether or not the direction of user's eyes faces a screen based on an angle value. When an angle value is greater than a preset value, the controller 190 may judge that the direction of user's eyes does not face a screen. When an angle value is less than a preset value, the controller 190 may judge that the direction of user's eyes faces a screen.

The controller 190 may calculate a depth setting value of zero according to checked results of the direction of user's eyes and may not adjust a depth value of a 3D image. Specifically, when an angle value is in a range of 70° to 90°, the controller 190 may calculate a depth setting value of zero. Also, when an angle value is in a range of 70° to 90°, the controller 190 may not adjust a depth value of a 3D image.

The controller 190 may adjust a depth value of a 3D image based on the calculated depth setting value.

In some embodiments, the controller 190 may calculate a depth setting value based on a user distance value rather than a viewing distance. That is to say, the controller 190 may calculate a depth setting value suitable for the user distance value calculated using the depth value setting reference table 1000. For example, when the calculated user distance value is equal to a reference distance of 1.4m, the controller 190 may calculate a depth setting value of zero. When the calculated user distance value is 1m, the controller 190 may calculate a depth setting value of -2.

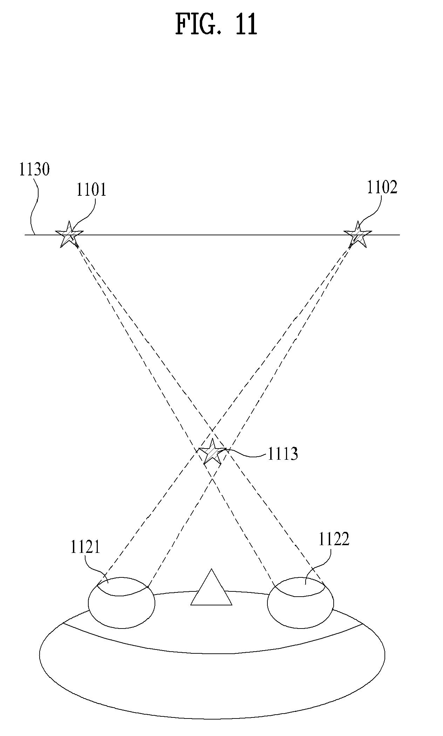

FIG. 11 is a diagram explaining binocular disparity.

Referring to FIG. 11, binocular disparity refers to a 3D display scheme for providing a sense of space or 3D by showing viewer's eyes 1121 and 1122 at least one of a left view image 1101 and a right view image 1102 captured using a binocular camera etc. A depth value may differ according to binocular disparity between the left view image 1101 and the right view image 1102 and in turn, the sense of space or 3 D provided to a viewer may differ according to the depth value. The depth value is a distance from a 3D display screen surface 1130 to a displayed 3D image 1113.

The smaller the distance between the left view image 1101 and the right view image 1102 decreases, the smaller the depth value. Thus, since it is recognized that an image is formed at a distance far away from the left eye 1121 and the right eye 1122, the sense of space or 3D provided to a viewer may be decreased. Also, the greater the distance between the left view image 1101 and the right view image 1102, the greater the depth value. Thus, since it is recognized that an image is formed at a distance close to the left eye 1121 and the right eye 1122, the sense of space or 3D provided to a viewer may be increased.

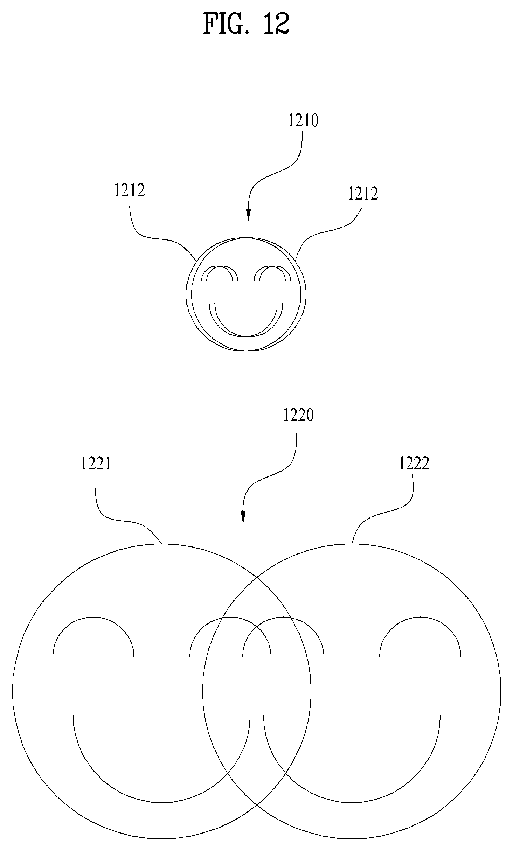

FIG. 12 is a diagram illustrating depth perception depending on the magnitude of binocular disparity.

Referring to FIG. 12, when viewer's eyes see a distant object 1210, a distance between a left eye image 1211 (i.e. an image formed at a left eye) and a right eye image 1212 (i.e. an image formed at a right eye) is decreased and therefore, binocular disparity is small when seeing the distant object 1210. Accordingly, it will be appreciated that adjusting binocular disparity of the 3D image 1113 to a small value enables the 3D image 1113 to be seen at a great distance and a depth value of the 3D image 1113 to be adjusted to a small value.

When viewer's eyes see a close object 1220, a distance interval between a left eye image 1221 and a right eye image 1222 is increased and therefore, binocular disparity is great when seeing the close object 1220. That is to say, binocular disparity of the object 1220 is greater than binocular disparity of the object 1210. Accordingly, it will be appreciated that adjusting binocular disparity of the 3D image 1113 to a great value enables the 3D image 1113 to be seen nearby and the depth value of the 3D image 1113 to be adjusted to a great value.

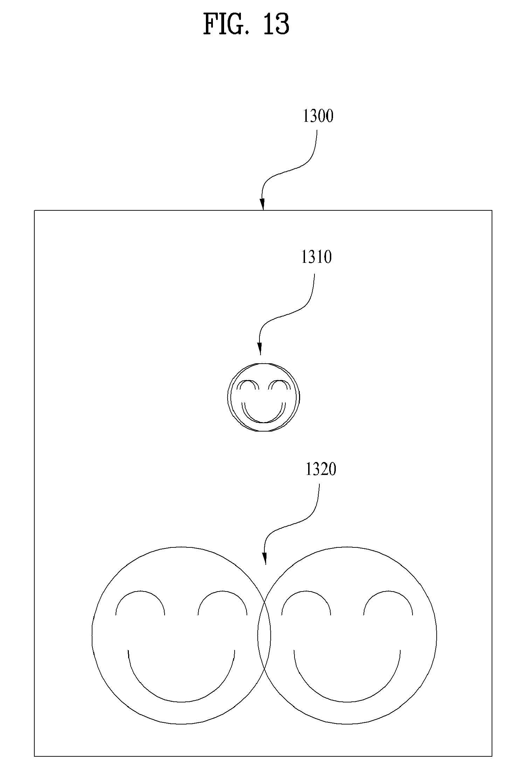

FIG. 13 is a diagram explaining an exemplary embodiment of a method for adjusting a depth value of a 3D image.

Referring to FIG. 13, the 3D image processing apparatus 100 may reduce a depth value of a 3D image 1300 by reducing binocular disparity of an object 1310 included in the 3D image 1300. That is to say, by adjusting binocular disparity of the object 1310 to a smaller value, the object 1310 may be seen by a viewer at a greater distance than an original distance, which may reduce a depth value of the 3D image 1300.

The 3D image processing apparatus 100 may increase the depth value of the 3D image 1300 by increasing binocular disparity of an object 1320 included in the 3D image 1300. That is to say, by adjusting binocular disparity of the object 1320 to a greater value, the object 1320 may be seen by a viewer closer than an original distance, which may increase the depth value of the 3D image 1300.

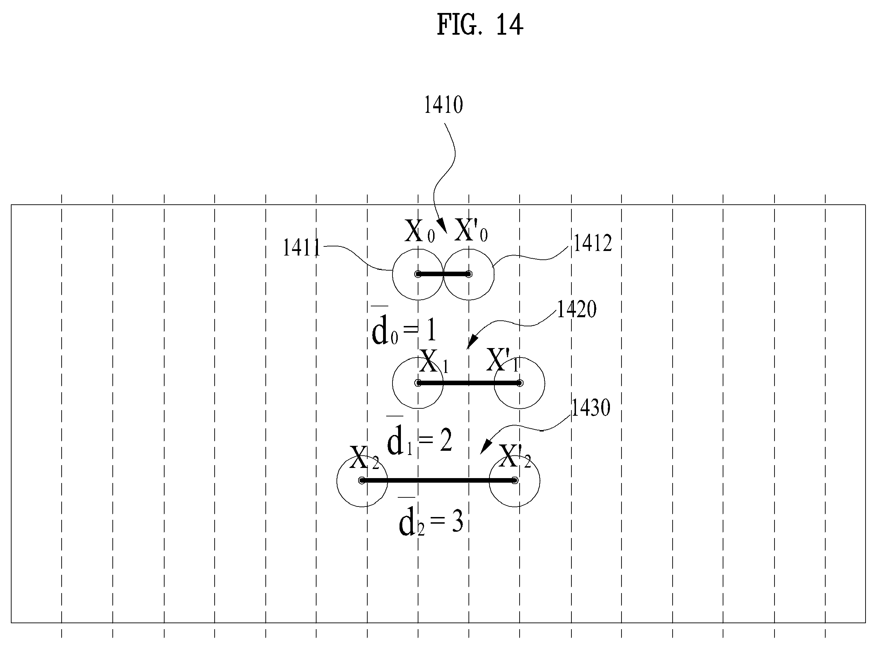

FIG. 14 is a diagram illustrating coordinates of an object included in an image.

Referring to FIG. 14, when a 3D image enters a vector graphic in which coordinates of a subject can be known, the coordinates of the subject may be represented by the following Equation 8 and Equation 9.

Equation 8

$$X_n = \{X_n \mid X_n \text{ is an } x\text{-coordinate of a right eye image of an } n^{th} \text{ object}, \ 0 \leq n \leq \text{Total number of object}\}$$

Equation 9

$$x'n = \{X'n \mid X'n \text{ is an x-coordinate of a right eye image of an } n^{th} \text{ object} , 0 \leq n \leq \text{Total number of object}\}$$

An object distance $\bar{d}_n$ refers to a difference between a position of a left eye object and a position of a right eye object with respect to an object and may be represented by the following Equation 10. The left eye object refers to an object included in left view image data or a coordinate representing an image of the object. The right eye object refers to an object included in right view image data or a coordinate representing an image of the object.
That is to say, with respect to an object 1411, there are a left eye object 1411 and a right eye object 1412.
Equation 10

$$\bar{d}_n = \left\{ \bar{d}_n \middle| \bar{d}_n = |x'_n - x_n| , 0 \leq n \leq Total\ number\ of\ object \right\}$$

An object distance of the object 1410 is 1, an object distance of the object 1420 is 2 and an object distance of the object 1430 is 3.
A collection of object distances $\bar{D}$ may be represented by the following Equation 11.
Equation 11

$$\bar{D} = \left\{ \bar{D} \middle| \bar{d}_n \in \bar{D}, 0 \leq n \leq Total\ number\ of\ object \right\}$$

The object distance may be changed by the following Equation 12.
Equation 12

$$d^n_{mod} = \left\{ \bar{d}^n_{mod} \middle| \bar{d}^n_{mod} = a\ \bar{d}_n , 0 \leq n \leq Total\ number\ of\ object \right\}$$

where, $\bar{d}^n_{mod}$ denotes a changed object distance. "a" denotes a variable representing the degree of a sense of 3D, and a value of the variable "a" may be set to a depth setting value or a value having a functional relation with the depth setting value.
In binocular disparity, the object distance may denote a sense of depth of a corresponding object and may also denote binocular disparity of the corresponding object. Accordingly, a depth value of a 3D image may be reduced as the variable "a" approaches zero in Equation 12, may remain when the variable "a" is 1, and may be increased when the variable "a" is greater than 1.
Additionally, a collection of changed object distances $\bar{D}_{mod}$ may be represented by the following Equation 13.
Equation 13

$$\overline{D}_{mod} = \{\overline{D}_{mod} | \, \overline{d}^{\,n}_{mod} \in \overline{D}_{mod}, 0 \leq n \leq Total\ number\ of\ object\}$$

In some embodiments, the 3D image processing apparatus 100 may calculate the variable "a" using the following Equation 14.
Equation 14

$$a = 1 + 0.1b$$

where, "b" denotes a depth setting value. For example, when "b" is zero, the depth value of the 3D image remains unchanged.

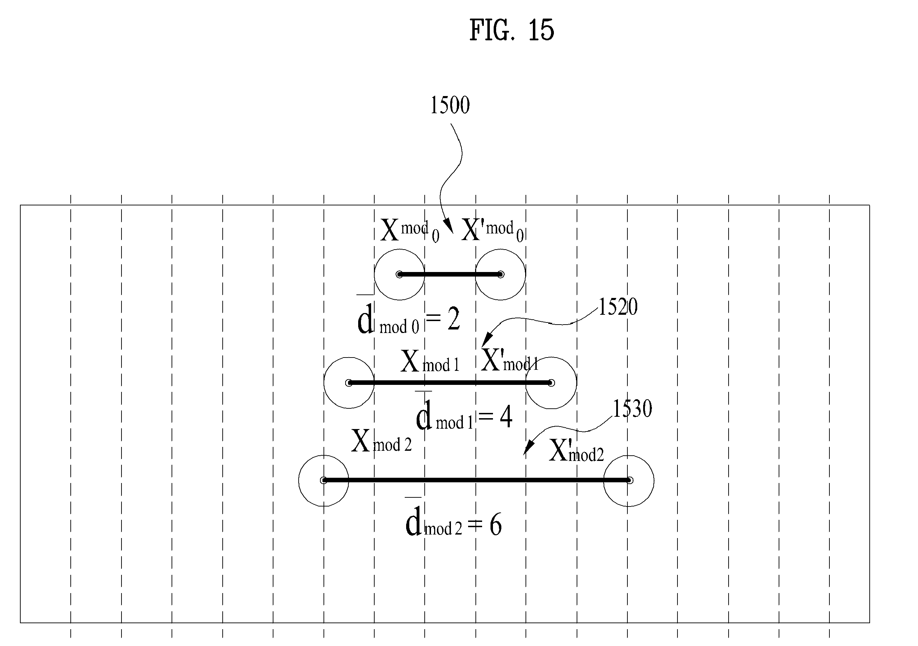

FIG. 15 is a diagram illustrating coordinates of an obj ect after displacement of the object illustrated in FIG. 14 is converted.
Referring to FIG. 15, when "a" is 2 in Equation 12, an object distance of an object 1510 is changed to 2, an object distance of an object 1520 is changed from 2 to 4, and an object distance of an object 1530 is changed from 3 to 6.

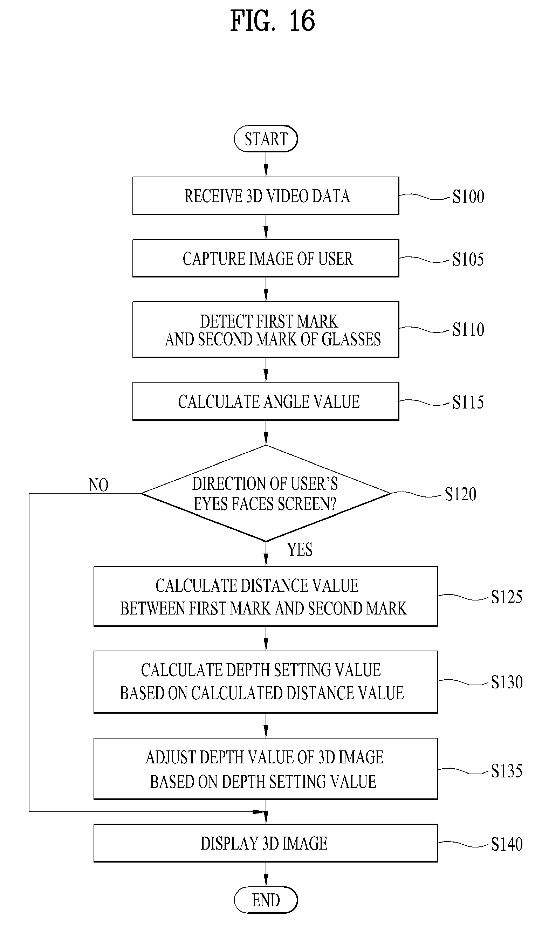

FIG. 16 is a flowchart illustrating an exemplary embodiment of a method for processing a 3D image according to the present invention.
Referring to FIG. 16, the receiver 101 receives video data including left view image data and right view image data (S100). The video data may be stereo-view video or multi-view video.
The image capture device 90 captures an image of a user (S105).
The controller 190 detects a first mark and a second mark of glasses from a video frame captured by the image capture device 90 (S110). The first mark and the second mark may be the marks 310, 320 and 330 illustrated in FIG. 3, and the glasses may be the glasses 400 illustrated in FIG. 4.
The controller 190 calculates an angle value based on at least one of the first mark and the second mark (S115). The controller 190 may calculate the angle value using the angle reference table 800 illustrated in FIG. 8 and the angle reference table 900 illustrated in FIG. 9.
The controller 190 checks whether or not the direction of eyes of the user who is wearing glasses faces a screen based on the angle value (S120). When the angle value is 70° or more, the controller 190 may judge that the direction of user's eyes does not face the screen. When the angle value is less than 70°, the controller 190 may judge that the direction of user's eyes face the screen.
When the direction of user's eyes faces the screen, the controller 190 calculates a distance value between the detected first and second marks (S125). The distance value may be a user distance value or may be a viewing distance. The controller 190 may calculate the user distance value using the distance reference table 600 illustrated in FIG. 6, and may calculate the viewing distance using Equation 6.
The controller 190 calculates a depth setting value based on the calculated distance value (S130). The controller 190 may calculate a depth setting value using the depth value setting reference table 1000 illustrated in FIG. 10. Additionally, the controller 190 may calculate the depth setting value based on a ratio of the calculated viewing distance to a reference viewing distance. When the calculated viewing distance is less than the reference viewing distance, the controller 190 may set the depth setting value to a negative value. When the calculated viewing distance is equal to the reference viewing distance, the controller 190 may set the depth setting value to zero. When the calculated viewing distance is greater than the reference viewing distance, the controller 190 may set the depth setting value to a positive value. The reference distance may be a value determined upon manufacture, or may be a value received by the receiver 101. The reference distance may be included in 3D video data.
The controller 190 controls adjustment of a depth value of a 3D image based on the calculated depth setting value (S135). The displacement calculator 245 may calculate an object distance of received 3D video data. In this case, the displacement calculator 245 may calculate an object distance using Equation 10. The displacement modifier 250 may calculate a value "a" based on the depth setting value using Equation 14. The displacement modifier 250 may calculate a changed object distance based on the calculated value "a" using Equation 12. The video reconstruction unit 255 may reconstruct left view image data and right view image data of received 3D video data such that the distance of the object is changed according to the calculated object distance.

The display 150 displays a 3D image (S140). The displayed 3D image may be a 3D image having an adjusted depth value, and may be a 3D image displayed directly without adjustment of the received depth value.

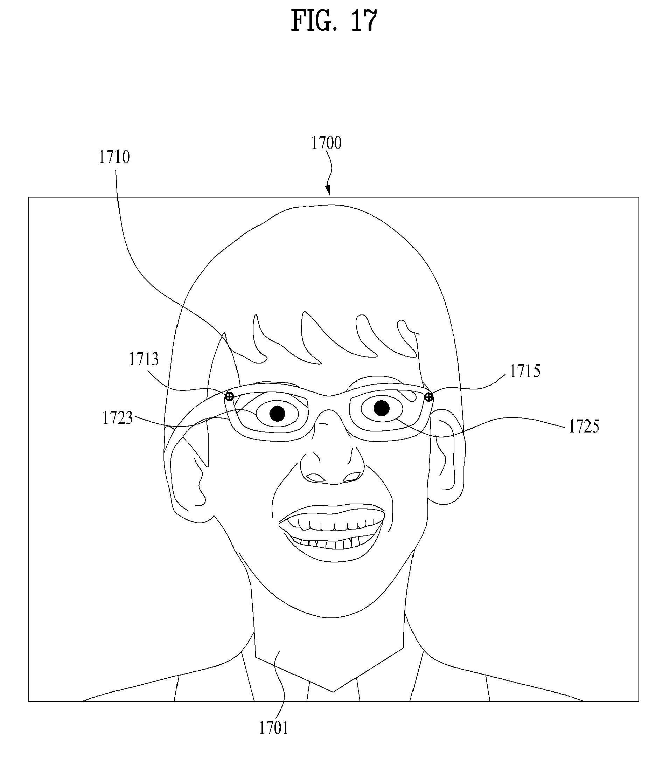

FIG. 17 is a diagram illustrating an exemplary embodiment of a video frame capturing an image in which a user is wearing 3D glasses.

Referring to FIG. 17, the controller 190 may detect marks 1713 and 1715 of 3D glasses 1710 in a captured video frame 1700. The controller 190 may recognize the first mark 1713 and the second mark 1715 using mark color information in the video frame 1700. The 3D glasses 1710 may be shutter glasses or polarized glasses, and may be the glasses 400 illustrated in FIG. 4. The marks 1713 and 1715 of the 3D glasses may be the marks 310, 320 and 330 illustrated in FIG 3. In some embodiments, one of the first mark 1713 and the second mark 1715 may be displayed on the 3D glasses 1710, and the controller 190 may detect one mark on the 3D glasses 1710.

The controller 190 may detect a face region of a user 1701 and may check whether or not the marks 1713 and 1715 are located in the detected face region. When the marks 1713 and 1715 are located in the face region, the controller 190 may judge that the user 1701 is wearing the 3D glasses 1710.

The controller 190 may detect the face region of the user 1701 and may detect eye images 1723 and 1725 from the detected face region. The controller 190 may check whether or not the detected eye images 1723 and 1725 are located at a left eye lens and a right eye lens of the 3D glasses 1710. When the eye images 1723 and 1725 are located at the left eye and right eye lenses, the controller 190 may judge that the user 1701 is wearing the 3D glasses 1710. Alternatively, the controller 190 may check a distance between the marks 1713 and 1715 and the detected eye images 1723 and 1725. When the checked distance is less than a predetermined distance, the controller 190 may judge that the user 1701 is wearing the 3D glasses 1710. The predetermined distance may be a distance between a left eye and a right eye.

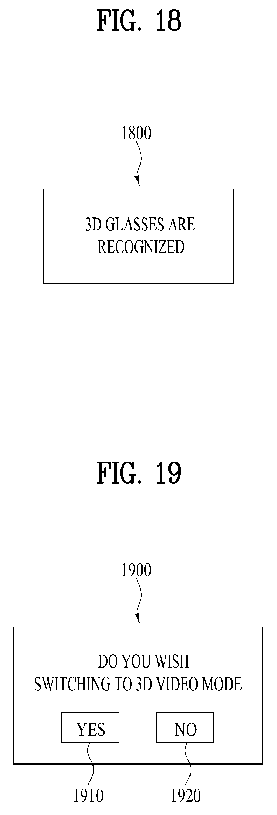

FIG. 18 is a diagram illustrating an exemplary embodiment of a message that informs of recognition of 3D glasses.

Referring to FIG. 18, the controller 190 may control display of a message 1800 that informs recognition of 3D glasses. The message 1800 may be displayed when the marks 1713 and 1715 are detected in the captured video frame 1700, and may be displayed when it is recognized that the user 1701 is wearing the 3D glasses 1710. The display of the message 1800 may automatically stop when a predetermined time has passed.

In some embodiments, the controller 190 may detect glasses from the video frame 1700 and may check whether or not the detected glasses have a predefined shape of glasses. When it is checked based on checked results that the detected glasses have the predefined shape of glasses, the controller 190 may control display of the message 1800. In one example, the predefined shape of glasses may be that of the glasses 400 illustrated in FIG. 4.

The controller 190 may control switching to a 3D video mode when the marks 1713 and 1715 are detected in the captured video frame 1700, and also may control switching to a 3D video mode when it is recognized that the user 1701 is wearing the 3D glasses 1710. The 3D video mode may be a video mode displaying a 3D image, and may include a first 3D video mode which displays a 3D image upon receiving a 2D image and a second 3D video mode which displays a 3D image upon receiving a 3D image. In a 2D video mode, a 2D image is displayed.

In some embodiments, the controller 190 may control switching to a 3D video mode when the glasses detected in the video frame 700 have a predefined shape of glasses.

FIG. 19 is a diagram illustrating an exemplary embodiment of a message that asks whether or not to perform switching to a 3D video mode.

Referring to FIG. 19, the controller 190 may control display of a message 1900 that asks whether or not to perform switching to a 3D video mode. The message 1900 may be displayed when the marks 1713 and 1715 are detected in the captured video frame 1700, and may be displayed when it is recognized that the user 1701 is wearing the 3D glasses 1710.

The message 1900 may include a button 1910 to select switching to a 3D video mode, and a button 1920 to select maintenance of a current video mode. When a user action of pressing the button 1910 is detected, the controller 190 controls switching to a 3D video mode in response to the detected user action. When a user action of pressing the button 1920 is detected, the controller 190 controls maintenance of a current video mode in response to the detected user action.

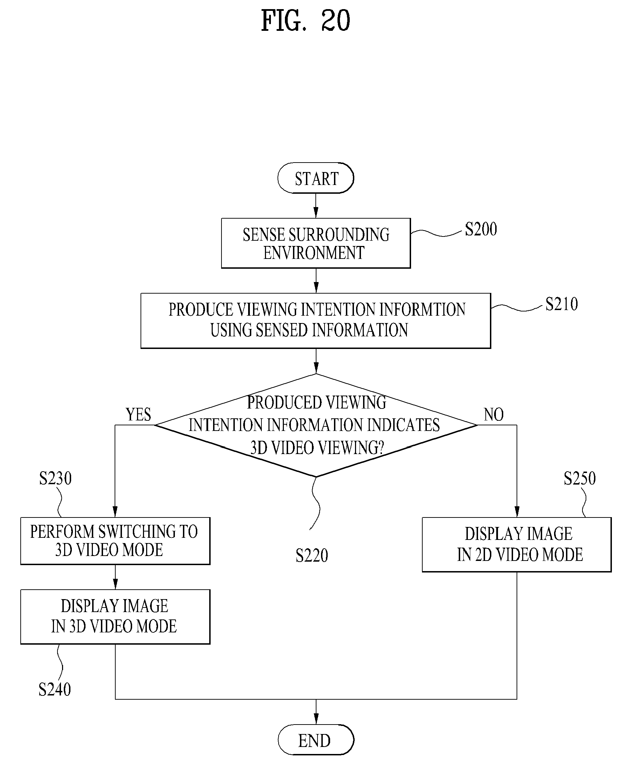

FIG. 20 is a flowchart illustrating an implementation procedure of an exemplary embodiment of a method for switching a video mode of a 3D image processing apparatus according to the present invention.

Referring to FIG. 20, a sensing unit may sense the surrounding environment of the 3D image processing apparatus 100 (S200). Information sensed by the sensing unit may include a captured image, a signal transmitted from 3D glasses, and a beam emitted from the 3D glasses. The sensing unit may include the image capture device 90, the external signal receiver 135 and the input unit 170. The image capture device 90 may capture an image of the surrounding environment of the 3D image processing apparatus 100 and may provide the captured image to the external signal receiver 135. The external signal receiver 135 may provide an image output from the image capture device 90 to the controller 190. The external signal receiver 135 may receive a signal transmitted from 3D glasses and may transmit the received signal to the controller 190.

The controller 190 produces viewing intention information with regard to viewing intention of a user using the sensed information (S210). The controller 190 may produce viewing intention information that indicates 3D video viewing, and may produce viewing intention information that indicates 2D video viewing. In some embodiments, viewing intention information may be represented by flag. When the flag has a value of '1', viewing intention information indicates 3D video viewing. When the flag has a value of '0', viewing intention information indicates 2D video viewing.

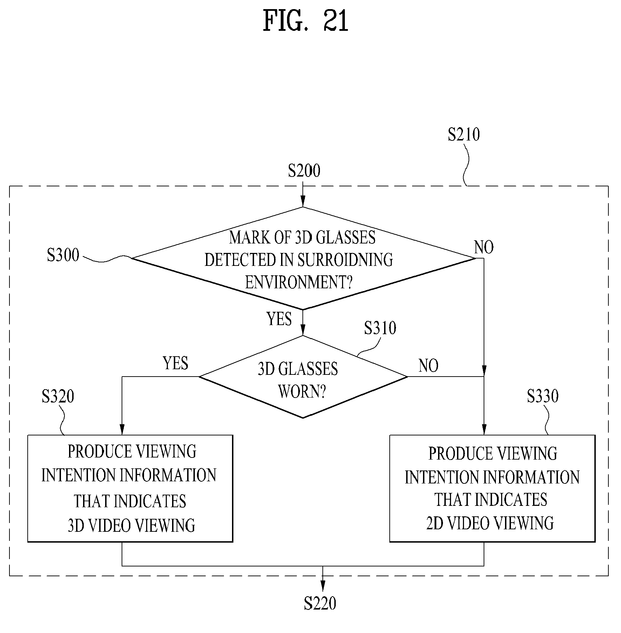

Operation S210 may include an implementation procedure of FIG. 21.

The controller 190 checks whether or not the produced viewing intention information indicates 3D video viewing (S220).

When the produced viewing intention information indicates 3D video viewing, the controller 190 controls switching to a 3D video mode (S230). In operation S230, the controller 190 may control display of the message 1800 of FIG. 18 or the message 1900 of FIG. 19. When the message 1900 of FIG. 19 is displayed, the controller 190 may control switching to a 3D video mode when a user action of pressing the button 1910 is detected, and may control maintenance of a current video mode when a user action of pressing the button 1920 is detected.

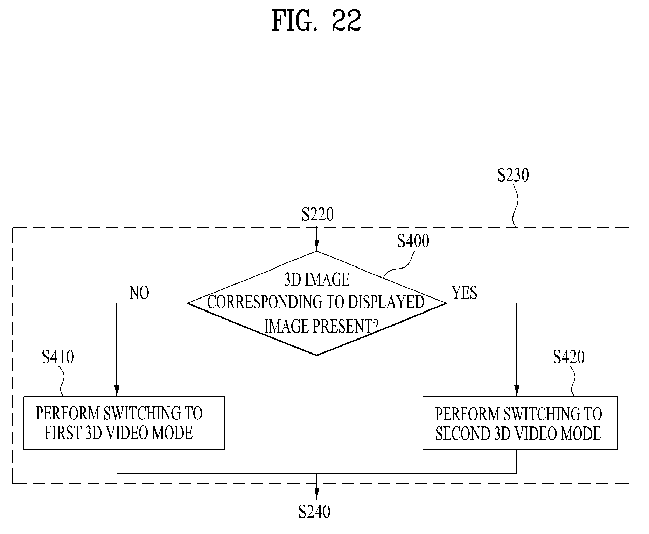

Operation S230 may include an implementation procedure of FIG. 22.

The 3D image processing apparatus 100 displays an image in a 3D video mode (S240). Operation S240 may include the implementation procedure of the 3D image processing method illustrated in FIG. 16.

When the produced viewing intention information does not indicate 3D video viewing, the 3D image processing apparatus 100 displays an image in a 2D video mode (S250).

FIG. 21 is a flowchart illustrating an implementation procedure of an exemplary embodiment of a method for producing viewing intention information.

Referring to FIG. 21, the controller 190 checks whether or not a mark of 3D glasses is detected in the surrounding environment using a video frame captured by the image capture device 90 (S300). The video frame may be the video frame 1700 of FIG. 17 and may include at least one of the mark 1713 and the mark 1715 of 3D glasses. The 3D glasses may be the glasses 1710. When the marks 1713 and 1715 are detected in the video frame 1700, the controller 190 may recognize that the mark of 3D glasses is detected in the surrounding environment of the 3D image processing apparatus.

When the mark of 3D glasses is detected, the controller 190 checks whether or not a user is wearing 3D glasses (S310). The controller 190 may detect a face region of a user from the video frame captured by the image capture device 90, may check whether or not the mark of 3D glasses is located in the detected face region, and may recognize that the user is wearing 3D glasses when the mark of 3D glasses is located in the face region.

The controller 190 may detect the face region of the user from the video frame captured by the image capture device 90 and may detect an eye image in the detected face region. The controller 190 may check whether or not the detected eye image is located on either of a left eye lens and a right eye lens, and may recognize that the user is wearing 3D glasses when the eye image is located on either of the left eye lens and the right eye lens. Alternatively, the controller 190 may check a distance between the detected eye image and the mark, and may judge that the user is wearing 3D glasses when the checked distance is less than a predetermined distance. The predetermined distance may be a distance between a left eye and a right eye.

When the user is wearing 3D glasses, the controller 190 produces viewing intention information that indicates 3D video viewing (S320).

When the user is not wearing 3D glasses, the controller 190 produces viewing intention information that indicates 2D video viewing (S330).

In some embodiments, when the mark of 3D glasses is detected in operation S300 of FIG. 21, the method may proceed to operation S320. Operation S210 of FIG. 20 may include the implementation procedure of operation S320 when the mark of 3D glasses is detected in operation S300 of FIG. 21.

FIG. 22 is a flowchart illustrating an implementation procedure of an exemplary embodiment of a method for switching to a 3D video mode.

Referring to FIG. 22, the controller 190 checks whether or not a 3D image corresponding to a displayed image is present (S400). The displayed image may be a 2D image, or a 3D image may be displayed in a 2D video mode. When the displayed image is a 2D image, a 3D image corresponding to the displayed image may be a 3D image received together with the 2D image, and may be video data including the 2D image and information to display the 2D image as a 3D image. When the displayed image is a 3D image displayed in a 2D video mode, the 3D image corresponding to the displayed image may be a 3D image displayed in a 2D video mode.

When the corresponding 3D image is not present, the controller 190 controls switching to the first 3D video mode (S410).

When the corresponding 3D image is present, the controller 190 controls switching to the second 3D video mode (S420).

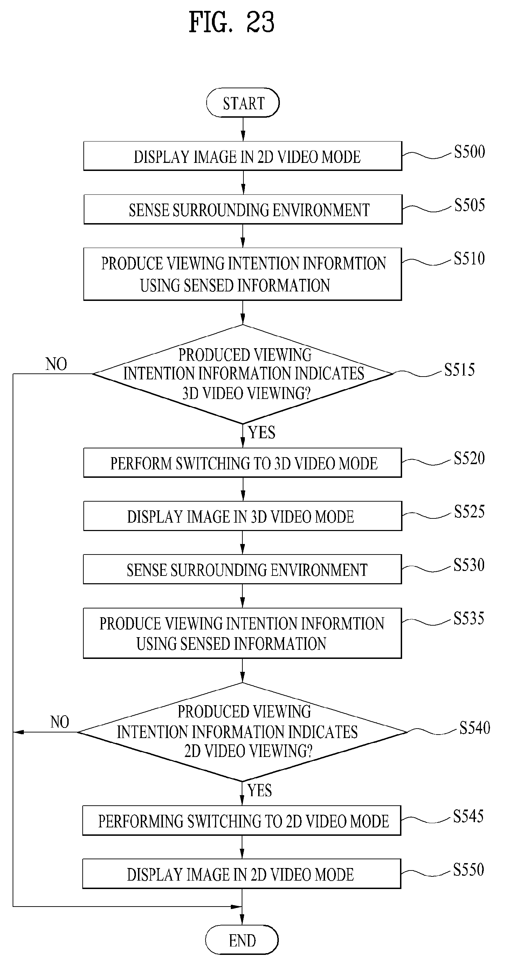

FIG. 23 is a flowchart illustrating an implementation procedure of another exemplary embodiment of a method for switching a video mode of a 3D image processing apparatus according to the present invention.

Referring to FIG. 23, the 3D image processing apparatus 100 displays an image in a 2D video mode (S500). Operation S500 may proceed after completion of booting or when a 2D video mode is selected by default or is selected by a user.

The sensing unit senses the surrounding environment of the 3D image processing apparatus 100 (S505). Information sensed by the sensing unit may include a captured image, a signal transmitted from 3D glasses, and a beam emitted from the 3D glasses. The sensing unit may include the image capture device 90, the external signal receiver 135 and the input unit 170. The image capture device 90 may capture an image of the surrounding environment of the 3D image processing apparatus 100 and may provide the captured image to the external signal receiver 135. The external signal receiver 135 may provide an image output from the image capture device 90 to the controller 190. The external signal receiver 135 may receive a signal transmitted from 3D glasses and may transmit the received signal to the controller 190.

The controller 190 produces viewing intention information with regard to viewing intention of a user using the sensed information (S510). The controller 190 may produce viewing intention information that indicates 3D video viewing, and may produce viewing intention information that indicates 2D video viewing. In some embodiments, viewing intention information may be represented by flag. When the flag has a value of '1', viewing intention information indicates 3D video viewing. When the flag has a value of '0', viewing intention information indicates 2D video viewing.

Operation S510 may include the implementation procedure of FIG. 21.

The controller 190 checks whether or not the produced viewing intention information indicates 3D video viewing (S515).

When the produced viewing intention information indicates 3D video viewing, the controller 190 controls switching to a 3D video mode (S520). In operation S520, the controller 190 may control display of the message 1800 of FIG. 18 or the message 1900 of FIG. 19. When the message 1900 of FIG. 19 is displayed, the controller 190 may control switching to a 3D video mode when a user action of pressing the button 1910 is detected, and may control maintenance of a current video mode when a user action of pressing the button 1920 is detected.

Operation S520 may include the implementation procedure of FIG. 22.

The 3D image processing apparatus 100 displays an image in a 3D video mode (S525). Operation S525 may include the implementation procedure of the 3D image processing method illustrated in FIG. 16.

The sensing unit senses the surrounding environment of the 3D image processing apparatus 100 (S530).

The controller 190 produces viewing intention information with regard to viewing intention of a user using the sensed information (S535).

The controller 190 checks whether or not the produced viewing intention information indicates 2D video viewing (S540).

When the produced viewing intention information indicates 2D video viewing, the controller 190 controls switching to a 2D video mode(S545).

The 3D image processing apparatus 100 displays an image in a 2D video mode (S550).

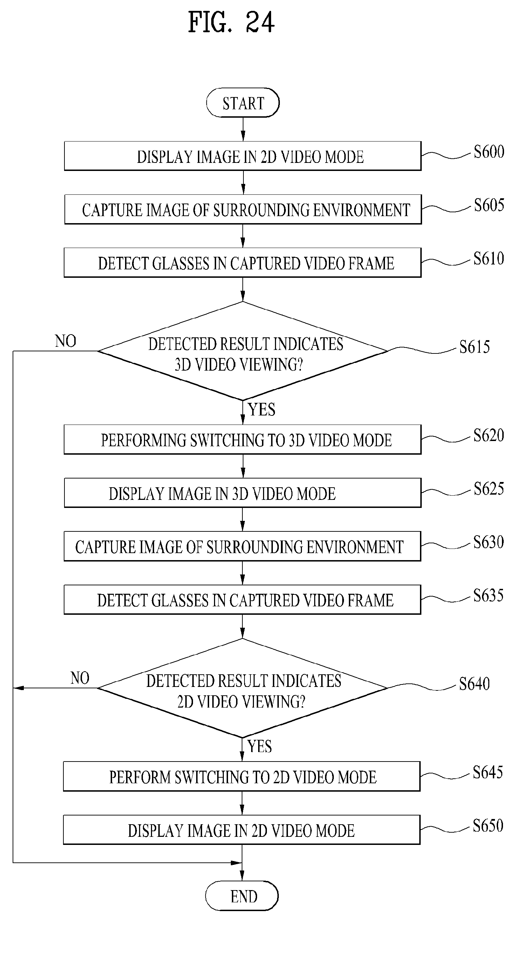

FIG. 24 is a flowchart illustrating an implementation procedure of a further exemplary embodiment of a method for switching a video mode of a 3D image processing apparatus according to the present invention.

Referring to FIG. 24, the 3D image processing apparatus 100 displays an image in a 2D video mode (S600). Operation S600 may proceed after completion of booting or when a 2D video mode is selected by default or is selected by a user.

The image capture device 90 captures an image of the surrounding environment of the 3D image processing apparatus 100 (S605). The image capture device 90 may capture an image of the surrounding environment of the 3D image processing apparatus 100 and may provide the captured image to the external signal receiver 135. The external signal receiver 135 may provide an image output from the image capture device 90 to the controller 190.

The controller 190 detects glasses in a video frame captured by the image capture device 90 (S610).

In some embodiments, in operation S610, the controller 190 may check whether or not the detected glasses have a predefined shape of glasses. In one example, the predefined shape of glasses may be the shape of the glasses 400 illustrated in FIG. 4.

In some embodiments, in operation S610, the controller 190 may check whether or not the detected glasses include a predefined mark. In one example, the predefined mark may be the mark 310, the mark 320 and the mark 330 illustrated in FIG. 3.

In some embodiments, operation S610 may include the implementation procedure of FIG. 21.

The controller 190 checks whether or not detected results indicate 3D video viewing (S615). The detected results may include results of checking whether or not the shape of the detected glasses has a predefined shape of glasses and may also include results of checking whether or not the detected glasses include a predefined mark. When the detected glasses have the predefined shape of glasses, the detected results may be analyzed as indicating 3D video viewing. When the detected glasses include the predefined mark, the detected results may be analyzed as indicating 3D video viewing.

The detected results may include viewing intention information of FIG. 21.

When the detected results indicate 3D video viewing, the controller 190 controls switching to a 3D video mode (S620). In operation S620, the controller 190 may control display of the message 1800 of FIG. 18 or the message 1900 of FIG. 19. When the message 1900 of FIG. 19 is displayed, the controller 190 may control switching to the 3D video mode in response to the detected user action of pressing the button 1910 and may control maintenance of a current video mode in response to the detected user action of pressing the button 1920.

Operation S620 may include the implementation procedure of FIG. 22.

The 3D image processing apparatus 100 displays an image in a 3D video mode (S625). Operation S625 may include the implementation procedure of the 3D image processing method illustrated in FIG. 16.

The image capture device 90 captures an image of the surrounding environment of the 3D image processing apparatus 100 (S630).

The controller 190 detects glasses from the video frame captured by the image capture device 90 (S635).

The controller 190 checks whether or not the detected results indicate 2D video viewing (S640).

When the detected results indicate 2D video viewing, the controller 190 controls switching to 2D video viewing (S645).

The 3D image processing apparatus 100 displays an image in a 2D video mode (S650).

The present invention may be implemented as code that can be written on a computer-readable recording medium and can thus be read by a computer. The computer-readable recording medium includes all types of recording devices in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer devices connected through a network so that computer-readable code is written thereto and executed therefrom in a decentralized manner.

As is apparent from the above description, according to the present invention, as user viewing intention is recognized using information obtained by sensing the surrounding environment of a 3D image processing apparatus, a video mode can be switched based on the user viewing intention, which allows a user to conveniently view 3D images without troublesome adjustment of a video mode. Moreover, as a result of displaying images in an appropriate video mode in conformity to the user situation, viewing satisfaction of the user can be increased and also, convenience of the user can be increased.

In addition, detecting a viewing distance using a mark formed at glasses enables accurate detection of the viewing distance of the user. By appropriately adjusting a depth value of a 3D image in conforming to the detected viewing distance, it is possible to provide the user with convenient 3D video viewing.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

1. A method for switching a video mode of a 3-Dimensional (3D) image processing apparatus, the method comprising:

   detecting glasses in a captured video frame; and
   switching the video mode to a 3D video mode that displays a 3D image according to the detected results.

2. The method according to claim 1, wherein the detecting includes checking whether or not the detected glasses have a predefined shape, and
   wherein the detected results include the checked results.

3. The method according to claim 1, wherein the detecting includes checking whether or not the detected glasses include a predefined mark, and
   wherein the detected results include the checked results.

4. The method according to claim 3, wherein the mark is formed of at least one of Light Emitting Diode (LED) light, a luminous material and a fluorescent material.

5. The method according to claim 3, wherein the checking includes:

   checking a first mark and a second mark in the detected glasses;
   calculating a distance value between the checked first mark and the checked second mark;
   calculating a depth setting value based on the calculated distance value; and
   adjusting a depth value of a 3D image based on the calculated depth setting value.

6. The method according to claim 1, wherein the detecting includes checking whether or not a user is wearing the detected glasses, and
   wherein the detected results include the checked results.

7. The method according to claim 1, wherein the 3D video mode includes a first 3D video mode that displays a received 2D image as a 3D image and a second 3D video mode that displays a received 3D image as a 3D image.

8. The method according to claim 7, wherein the switching to the 3D video mode includes:

   checking whether or not a 3D image corresponding to a displayed image is present; and
   selecting one of the first 3D video mode and the second 3D video mode based on the checked results.

9. The method according to claim 1, further comprising switching the video mode to a 2D video mode that displays a 2D image based on the detected results.

10. A 3-Dimensional (3D) image processing apparatus comprising:

    a display configured to display an image; and
    a controller configured to detect glasses in a captured video frame and to control switching to a 3D video mode in witch the display displays a 3D image according to the detected results.

11. A 3-Dimensional (3D) image processing method comprising:

    detecting a first mark and a second mark of glasses in a captured video frame;
    calculating a distance value between the detected first mark and the second first mark;
    calculating a depth setting value based on the distance value; and
    adjusting a depth value of a 3D image based on the calculated depth setting value.

12. The method according to claim 11, wherein the first mark and the second mark are located respectively on a rim of a left eye lens and a rim of a right eye lens of the glasses.

13. The method according to claim 11, further comprising calculating an angle value based on a shape of at least one of the first mark and the second mark,
    wherein the calculating the depth setting value includes calculating the depth setting value based on the distance value and the angle value.

14. The method according to claim 13, wherein the angle value is calculated based on at least one of a horizontal length of the mark and a ratio of the horizontal length to a vertical length of the mark.

15. The method according to claim 13, further comprising checking whether or not the direction of eyes of a user who is wearing the glasses faces a screen based on the angle value,
    wherein whether or not to implement the adjusting the depth value of the 3D image is determined based on the checked results.

16. The method according to claim 15, wherein the checking the direction of eyes faces the screen further includes checking whether or not the angle value is a preset angle or more.

17. The method according to claim 13, wherein the calculating the depth setting value includes:

    calculating a viewing distance using the distance value and the angle value; and

calculating the depth setting value based on the calculated viewing distance.

18. The method according to claim 17, wherein the depth setting value is calculated based on a ratio of a reference viewing distance to the calculated viewing distance.

19. The method according to claim 11, wherein the distance value is the number of pixels between the first mark and the second mark.

20. A 3-Dimensional (3D) image processing apparatus comprising:

a receiver configured to receive a 3-Dimensional (3D) image; and
a controller configured to detect a first mark and a second mark of glasses in a captured video frame, to calculate a distance value between the detected first mark and the detected second mark, to calculate a depth setting value based on the calculated distance value, and to control adjustment of a depth value of the received 3D image based on the calculated depth setting value.

# FIG. 1

# FIG. 2

SIGNAL PROCESSOR 140

230 VIDEO DECODER

240 IMAGE PROCESSING UNIT

260 SCALER

160 SOUND

101 RECEIVER

210 DEMULTIPLEXER

DISPLACEMENT CALCULATOR 245

DISPLACEMENT MODIFIER 250

VIDEO RECONSTRUCTION UNIT 255

MIXER 270

FORMATTER 280

GLASSES 201

190 CONTROLLER

220 AUDIO DECODER

DISPLAY 150

EP 2 523 464 A2

# FIG. 3

310    320    330

# FIG. 4

400

410

420

# FIG. 5

500

530

510    520

# FIG. 6

600

| PIXEL DISTANCE BETWEEN MARKS OF GLASSES | USER DISTANCE VALUE |
|---|---|
| 100 pixel | 2.2m |
| 150 pixel | 2.0m |
| 200 pixel | 1.8m |
| 250 pixel | 1.6m |
| 300 pixel | 1.4m |
| 350 pixel | 1.2m |
| 400 pixel | 1.0m |
| 450 pixel | 0.8m |
| 500 pixel | 0.6m |
| .... | ... |

# FIG. 7

700

711

712 710

# FIG. 8

800

| HORIZONTAL LENGTH OF MARK | ANGLE | COEFFICIENT |
|---|---|---|
| 10 pixel이하 | 70˚~90˚ | 1.0 |
| 10 pixel | 60˚ | 2.2 |
| 15 pixel | 50˚ | 2.0 |
| 20 pixel | 40˚ | 1.8 |
| 25 pixel | 30˚ | 1.6 |
| 30 pixel | 20˚ | 1.4 |
| 35 pixel | 10˚ | 1.2 |
| 40 pixel | 0˚ | 1.0 |

# FIG. 9

900

| RATIO | ANGLE | COEFFICIENT |
|-------|-------|-------------|
| 0.34 | 70°~90° | 1.0 |
| 0.5 | 60° | 2.2 |
| 0.64 | 50° | 2.0 |
| 0.77 | 40° | 1.8 |
| 0.87 | 30° | 1.6 |
| 0.94 | 20° | 1.4 |
| 0.98 | 10° | 1.2 |
| 1 | 0° | 1.0 |

# FIG. 10

1000

| VIEWING DISTANCE / ANGLE | 0.6m or less | 0.6m | 0.8m | 1.0m | 1.2m | 1.4m [REFERENCE VIEWING DISTANCE] | 1.6m | 1.8m | 2.0m | 2.2m |
|---|---|---|---|---|---|---|---|---|---|---|
| 0°~70° | 0 | -4 | -3 | -2 | -1 | 0 | +1 | +2 | +3 | +4 |
| 70°~90° | 0 | | | | | | | | | |

# FIG. 11

# FIG. 12

1210

1212

1212

1220

1221

1222

## FIG. 13

FIG. 14

EP 2 523 464 A2

FIG. 15

1500

$X_{mod\,0}$   $X'_{mod\,0}$

$\overline{d}_{mod\,0} = 2$

1520

$X_{mod\,1}$   $X'_{mod\,1}$

$\overline{d}_{mod\,1} = 4$

1530

$X_{mod\,2}$   $X'_{mod\,2}$

$\overline{d}_{mod\,2} = 6$

EP 2 523 464 A2

# FIG. 16

```
                    ( START )
                        │
                        ▼
        ┌──────────────────────────────┐
        │    RECEIVE 3D VIDEO DATA      │───── S100
        └──────────────────────────────┘
                        │
                        ▼
        ┌──────────────────────────────┐
        │    CAPTURE IMAGE OF USER      │───── S105
        └──────────────────────────────┘
                        │
                        ▼
        ┌──────────────────────────────┐
        │       DETECT FIRST MARK       │───── S110
        │  AND SECOND MARK OF GLASSES   │
        └──────────────────────────────┘
                        │
                        ▼
        ┌──────────────────────────────┐
        │      CALCULATE ANGLE VALUE    │───── S115
        └──────────────────────────────┘
                        │
                        ▼
   NO           ◇ DIRECTION OF USER'S ◇
◄──────────     ◇ EYES FACES SCREEN?  ◇───── S120
│                        │
│                       YES
│                        ▼
│       ┌──────────────────────────────┐
│       │    CALCULATE DISTANCE VALUE   │───── S125
│       │ BETWEEN FIRST MARK AND SECOND MARK │
│       └──────────────────────────────┘
│                        │
│                        ▼
│       ┌──────────────────────────────┐
│       │   CALCULATE DEPTH SETTING VALUE  │───── S130
│       │ BASED ON CALCULATED DISTANCE VALUE │
│       └──────────────────────────────┘
│                        │
│                        ▼
│       ┌──────────────────────────────┐
│       │   ADJUST DEPTH VALUE OF 3D IMAGE │───── S135
│       │  BASED ON DEPTH SETTING VALUE    │
│       └──────────────────────────────┘
│                        │
└───────────────────────►│
                         ▼
        ┌──────────────────────────────┐
        │       DISPLAY 3D IMAGE        │───── S140
        └──────────────────────────────┘
                        │
                        ▼
                    ( END )
```

# FIG. 17

# FIG. 18

1800

3D GLASSES ARE
RECOGNIZED

# FIG. 19

1900

DO YOU WISH
SWITCHING TO 3D VIDEO MODE

| YES | NO |
| --- | --- |

1910    1920

# FIG. 20

START

SENSE SURROUNDING ENVIRONMENT ─── S200

PRODUCE VIEWING INTENTION INFORMTION USING SENSED INFORMATION ─── S210

PRODUCED VIEWING INTENTION INFORMATION INDICATES 3D VIDEO VIEWING?

YES                    NO

S220

S230
PERFORM SWITCHING TO 3D VIDEO MODE

S250
DISPLAY IMAGE IN 2D VIDEO MODE

DISPLAY IMAGE IN 3D VIDEO MODE

S240

END

# FIG. 21

S210

S200

S300 — MARK OF 3D GLASSES DETECTED IN SURROIDNING ENVIRONMENT? — NO

YES

S310 — 3D GLASSES WORN?

YES

NO

S320 — PRODUCE VIEWING INTENTION INFORMATION THAT INDICATES 3D VIDEO VIEWING

S330 — PRODUCE VIEWING INTENTION INFORMATION THAT INDICATES 2D VIDEO VIEWING

S220

FIG. 22

S230

S220

S400

3D IMAGE
CORRESPONDING TO DISPLAYED
IMAGE PRESENT?

NO

YES

S410

PERFORM SWITCHING TO
FIRST 3D VIDEO MODE

S420

PERFORM SWITCHING TO
SECOND 3D VIDEO MODE

S240

# FIG. 23

```
                    ( START )
                        |
                        v
        DISPLAY IMAGE IN 2D VIDEO MODE ───── S500
                        |
                        v
        SENSE SURROUNDING ENVIRONMENT ───── S505
                        |
                        v
        PRODUCE VIEWING INTENTION INFORMTION ───── S510
             USING SENSED INFORMATION
                        |
                        v
                PRODUCED VIEWING
   NO   INTENTION INFORMATION INDICATES ───── S515
        ◄──        3D VIDEO VIEWING?
                        | YES
                        v
        PERFORM SWITCHING TO 3D VIDEO MODE ───── S520
                        |
                        v
        DISPLAY IMAGE IN 3D VIDEO MODE ───── S525
                        |
                        v
        SENSE SURROUNDING ENVIRONMENT ───── S530
                        |
                        v
        PRODUCE VIEWING INTENTION INFORMTION ───── S535
             USING SENSED INFORMATION
                        |
                        v
                PRODUCED VIEWING
   NO   INTENTION INFORMATION INDICATES ───── S540
        ◄──        2D VIDEO VIEWING?
                        | YES
                        v
        PERFORMING SWITCHING TO 2D VIDEO MODE ───── S545
                        |
                        v
        DISPLAY IMAGE IN 2D VIDEO MODE ───── S550
                        |
                        v
                     ( END )
```

# FIG. 24

START

DISPLAY IMAGE IN 2D VIDEO MODE — S600

CAPTURE IMAGE OF SURROUNDING ENVIRONMENT — S605

DETECT GLASSES IN CAPTURED VIDEO FRAME — S610

DETECTED RESULT INDICATES 3D VIDEO VIEWING? — S615

NO

YES

PERFORMING SWITCHING TO 3D VIDEO MODE — S620

DISPLAY IMAGE IN 3D VIDEO MODE — S625

CAPTURE IMAGE OF SURROUNDING ENVIRONMENT — S630

DETECT GLASSES IN CAPTURED VIDEO FRAME — S635

DETECTED RESULT INDICATES 2D VIDEO VIEWING? — S640

NO

YES

PERFORM SWITCHING TO 2D VIDEO MODE — S645

DISPLAY IMAGE IN 2D VIDEO MODE — S650

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110045021
- KR 1020110082688